Europäisches Patentamt

European Patent Office

Office européen des brevets

(11) Veröffentlichungsnummer: **0 245 843 B1**

# (12) EUROPÄISCHE PATENTSCHRIFT

(45) Veröffentlichungstag der Patentschrift: **07.08.91**

(51) Int. Cl.5: **G01M 3/22**, G01M 3/20, F04D 19/04

(21) Anmeldenummer: **87106889.6**

(22) Anmeldetag: **12.05.87**

---

(54) **Heliumlecksuchanlage.**

---

(30) Priorität: **15.05.86 DE 3616319**

(43) Veröffentlichungstag der Anmeldung:
**19.11.87 Patentblatt 87/47**

(45) Bekanntmachung des Hinweises auf die
Patenterteilung:
**07.08.91 Patentblatt 91/32**

(84) Benannte Vertragsstaaten:
**AT BE CH DE ES FR GB GR IT LI LU NL SE**

(56) Entgegenhaltungen:
**EP-A- 0 086 460**
**EP-A- 0 218 458**
**DE-A- 1 648 648**
**DE-U- 7 731 974**
**FR-A- 1 126 188**

**SOVIET INVENTIONS ILLUSTRATED, Sektion
Mechanik, Woche 8608, 8. März 1986, Zusammenfassungsnr. 86 054531/08 Q 56, Derwent
Publications Ltd., London, GB; & SU - A - 1
171 606 (EGORKIN A.A.) 28.12.1983**

(73) Patentinhaber: **ALCATEL HOCHVAKUUMTECH-
NIK GmbH**
**Am Bildacker 1 Postfach 1151**
**6980 Wertheim(DE)**

(72) Erfinder: **Bürger, Heinz-Dieter**
**Breslauer Strasse 111**
**W-6980 Wertheim/Main(DE)**

(74) Vertreter: **Weinmiller, Jürgen**
**Lennéstrasse 9 Postfach 24**
**W-8133 Feldafing(DE)**

---

## Beschreibung

Die Erfindung bezieht sich auf eine Heliumlecksuchanlage mit einer Massenspektrometerzelle an der Saugseite einer Molekularpumpe und mit einer mechanischen Vorpumpe, wobei ein Prüfling bzw. eine Prüfsonde zwischen den beiden Pumpen angeschlossen ist.

Eine derartige Heliumlecksuchanlage ist aus der DE-AS 16 48 648 bekannt. Der Heliumnachweis im Prüfling erfolgt hier im sogenannten Gegenstromprinzip, d.h. daß die Heliumatome entgegen der Pumprichtung die Molekularpumpe durchqueren müssen, um in der Massenspektrometerzelle nachgewiesen werden zu können. Je wirkungsvoller die Molekularpumpe arbeitet, d.h. je größer das Druckverhältnis zwischen Saugseite und Auslaßseite dieser Pumpe ist, umso geringer wird die Anzahl der durch die Pumpe in Gegenrichtung diffundierenden Heliumatome und damit die Empfindlichkeit der Lecksuchanlage. So wurde bereits vorgeschlagen, für Meßbereiche hoher Empfindlichkeit die Drehzahl der als Turbopumpe ausgebildeten Molekularpumpe zu verringern, um die Heliumdiffusionsrate in Gegenrichtung zu erhöhen. In anderen Fällen wurde vorgeschlagen, den Spaltabstand zwischen Rotor und Stator der Molekularpumpe zu vergrößern und schließlich wurde auch schon vorgeschlagen, falls eine Öldiffusionspumpe als Hochvakuumpumpe verwendet wird, deren Heizleistung für die Bereiche hoher Nachweisempfindlichkeit zu verringern.

Alle diese Maßnahmen führen jedoch nicht nur zu der gewünschten Erhöhung der Nachweisempfindlichkeit für Helium im Massenspektrometer, sondern auch zum Nachweis von Heliumatomen, die gar nicht vom Prüfling stammen, sondern sich in der mechanischen Vorpumpe angesammelt haben und nun aufgrund des verringerten Kompressionsverhältnisses der Hochvakuumpumpe zur Meßzelle gelangen. Vielfach verwendet man eine zweistufige mechanische Vorpumpe in einem gemeinsamen Gehäuse und von einer gemeinsamen Welle angetrieben. Am Pumpenauslaß, an dem Atmosphärendruck herrscht, sitzt in der Regel ein Rückschlagventil, das Lufteinbrüche verhindern soll. In der Nähe dieses Ventils sammeln sich bei längerem Betrieb im Öl gebunden Heliumatome an, die in Gegenrichtung zur normalen Pumprichtung durch die Pumpe diffundieren können und die eigentliche Messung im Bereich hoher Empfindlichkeiten stören oder verfälschen können.

Aufgabe der Erfindung ist es, solche Störungen zu unterbinden und damit zuverlässige Messungen der Leckrate im Bereich hoher Empfindlichkeit zu ermöglichen.

Diese Aufgabe wird erfindungsgemäß dadurch gelöst, daß die mechanische Vorpumpe aus drei hintereinandergeschalteten Stufen besteht. Vorzugsweise liegen die drei Stufen in einem gemeinsamen Gehäuse und werden über eine gemeinsame Welle angetrieben.

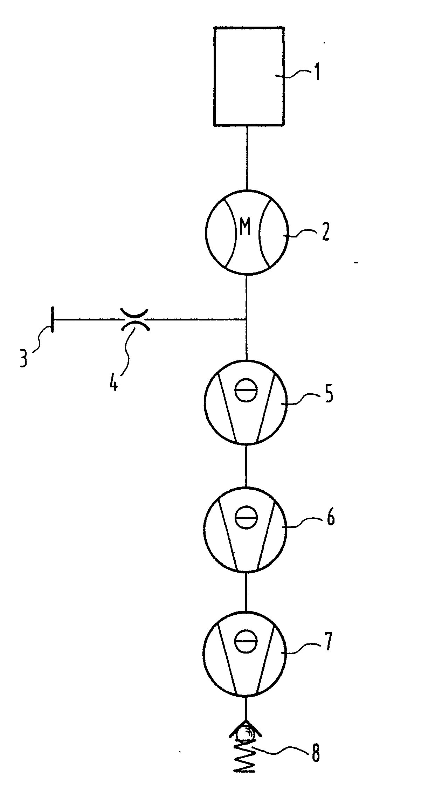

Nachfolgend wird die Erfindung anhand eines Bevorzugten Ausführungsbeispiels mithilfe der einzigen Zeichnung näher erläutert, die das Schema einer erfindungsgemäßen Heliumlecksuchanlage zeigt.

Die Anlage enthält eine Massenspektrometerzelle 1, die an die Saugseite einer Molekularvakuumpumpe, z.B. einer Holweckpumpe 2, angeschlossen ist. Die Druckseite dieser Pumpe steht über ein Drosselventil 4 oder eine weitere Molekularpumpe mit einem Anschlußstutzen 3 für den Prüfling sowie unmittelbar mit der Saugseite einer mechanischen Vorpumpe in Verbindung. Diese mechanische Vorpumpe besteht aus drei hintereinandergeschalteten Pumpstufen 5, 6 und 7, wobei die letzte Pumpstufe 7, die gegen Atmosphärendruck arbeitet, mit einem Rückschlagventil 8 gegen Atmosphäre verschlossen ist. Die drei mechanischen Vorpumpen, z.B. Drehschieberpumpen, befinden sich in der Regel in einem gemeinsamen Gehäuse und werden von einer gemeinsamen nicht dargestellten Welle angetrieben. Durch das Einfügen einer dritten Stufe in die mechanische Vorpumpe wird die Rückdiffusion von im Bereich der Ventilklappe 8 vorhandenen Heliumatomen praktisch verhindert. Die Molekularvakuumpumpe 2 kann also mit einem sehr geringen Kompressionsverhältnis arbeiten und mißt trotzdem nur Heliumatome, die vom Prüfling über das Drosselventil 4 ankommen. Bei einem plötzlichen Heliumeinbruch über den Anschlußstutzen 3 werden die Heliumatome rasch bis in die letzte mechanische Pumpenstufe 7, die gegen Atmosphärendruck arbeitet, befördert, von wo sie nicht mehr zurückdiffundieren können. In diesem Fall liegt beispielsweise am Übergang von der Pumpstufe 7 zur Pumpstufe 6 ein Heliumpartialdruck von $10^{-2}$ mbar vor, am Übergang von der Pumpstufe 6 zur Pumpstufe 5 ein Heliumpartialdruck von $10^{-4}$ mbar und am Übergang von der mechanischen Vorpumpe zur Molekularpumpe 2 ein Heliumpartialdruck von $5 \times 10^{-6}$ mbar. Unter diesen Bedingungen waren keine Störsignale meßbar, die von durch die Vorpumpe zurückdiffundierten Heliumatomen stammen könnten. Dieser Effekt läßt sich nur der Dreistufigkeit der Vorpumpe und der Tatsache zuschreiben, daß sich die Heliumatome in der Vorpumpe bevorzugt im Bereich des Atmosphärendrucks konzentrieren.

## Patentansprüche

1. Heliumlecksuchanlage mit einer Massenspektrometerzelle an der Saugseite einer Molekularpumpe und mit einer mechanischen Vorpumpe, wobei ein Prüfling bzw. eine Prüfsonde zwischen den beiden Pumpen angeschlossen ist, dadurch **gekennzeichnet,** daß die mechanische Vorpumpe aus drei hintereinandergeschalteten Stufen (5, 6, 7) besteht.

2. Heliumlecksuchanlage nach Anspruch 1, dadurch gekennzeichnet, daß die drei Stufen in einem gemeinsamen Gehäuse liegen und über eine gemeinsame Welle angetrieben werden.

## Claims

1. A helium leak detector with a mass spectrometer cell at the suck-in side of a molecular pump and with a mechanical primary pump, a specimen or a test probe respectively being connected to the transition between the two pumps, characterized in that the mechanical primary pump consists of three stages (5, 6, 7) branched in series.

2. A helium leak detector according to claim 1, characterized in that the three stages are disposed in a common housing and are driven by a common shaft.

## Revendications

1. Détecteur de fuites à hélium avec une cellule de spectromètre de masse reliée au côté aspiration d'une pompe moléculaire et avec une pompe primaire mécanique, une éprouvette ou une sonde de test respectivement étant interconnecté entre les deux pompes, caractérisé par le fait que la pompe primaire mécanique est constituée de trois étages (5, 6, 7) en série.

2. Détecteur de fuites à hélium selon la revendication 1, caractérisé par le fait que les trois étages se trouvent dans un bâti commun et sont entraînés par un arbre commun.